# EUROPEAN PATENT SPECIFICATION

(11) **EP 2 011 288 B1**
(45) Date of publication and mention of the grant of the patent: **25.11.2009**
(21) Application number: 07760376.9
(22) Date of filing: 10.04.2007
(51) Int. Cl.: H04W 28/22

(54) **METHOD FOR RADIO RESOURCE CONTROL REQUESTED CODEC RATE CONTROL FOR VOIP**
FÜR FUNKRESSOURCENSTEUERUNG ERFORDERLICHE CODEC-RATENSTEUERUNG FÜR VOIP
PROCEDE PERMETTANT DE CONTROLER LA VITESSE DE CODEC DEMANDEE PAR UNE COMMANDE DE RESSOURCE RADIO POUR VOIP

(30) Priority: 12.04.2006 US 791361 P; 17.10.2006 US 829686 P
(43) Date of publication of application: 07.01.2009
(60) Divisional application: 09172966.5
(73) Proprietor: Interdigital Technology Corporation, Wilmington, DE 19810 (US)
(72) Inventor: MILLER, James M., Verona, New Jersey 07044 (US); MENON, Narayan Parappil, Syosset, New York 11791 (US); LU, Guang, Dollard-des-ormeaux, Québec H9B 1J4 (CA)
(74) Representative: Engdahl, Stefan
(86) International application number: PCT/US2007/066303
(87) International publication number: WO 2007/121163

(56) References cited:
- WO-A-03/019961
- WO-A1-2005/122605
- US-A1- 2004 160 979
- US-A1- 2005 099 961

## Description

FIELD OF INVENTION

This invention relates to the field of wireless communications. More specifically, it relates to rate control for voice over IP (VoIP) services in a 3GPP system.

BACKGROUND

In universal mobile telecommunications system (UMTS), there are two ways to provide voice services. One way is to use a traditional circuit switched (CS) voice service. The other way to provide voice services is to use voice over IP (VoIP) in the packet switched (PS) domain. VoIP represents the family of technologies that allow IP networks to be used for voice applications, such as telephony, voice instant messaging, and teleconferencing.

Adaptive multi-rate (AMR) is a multi-rate codec adopted by 3GPP for speech coding. An AMR speech coder consists of a multi-rate speech coder, a source controlled rate scheme including a voice activity detector and a comfort noise generation system, and an error concealment mechanism to combat the effects of transmission errors and lost packets. The multi-rate speech coder is a single integrated speech codec, with eight source rates ranging from 4.75 kbit/s to 12.2 kbit/s, and a low rate background noise encoding mode. The speech coder is capable of switching its bit-rate every 20 ms speech frame upon command. Table 1 displays the supported rates for the AMR codec.

**Table 1.**

| Codec mode | Source codec bit-rate |
|---|---|
| AMR_12.20 | 12,20 kbit/s (GSM EFR) |
| AMR_10.20 | 10,20 kbit/s |
| AMR_7.95 | 7,95 kbit/s |
| AMR_7.40 | 7,40 kbit/s (IS-641) |
| AMR_6.70 | 6,70 kbit/s (PDC-EFR) |
| AMR_5.90 | 5,90 kbit/s |
| AMR_5.15 | 5,15 kbit/s |
| AMR_4.75 | 4,75 kbit/s |
| AMR_SID | 1,80 kbit/s |

An adaptive multi-rate wideband (AMR-WB) speech codec can also be used in 3GPP. AMR-WB speech codec uses the same technology as AMR speech codec with a wider speech bandwidth. Table 2 displays the supported rates for the AMR-WB codec.

**Table 2.**

| Codec mode | Source codec bit-rate |
|---|---|
| AMR-WB 23.85 | 23.85 kbit/s |
| AMR-WB_23.05 | 23.05 kbit/s |
| AMR-WB_19.85 | 19.85 kbit/s |
| AMR-WB_18.25 | 18.25 kbit/s |
| AMR-WB_15.85 | 15.85 kbit/s |
| AMR-WB_14.25 | 14.25 kbit/s |
| AMR-WB_12.65 | 12.65 kbit/s |
| AMR-WB_8.85 | 8.85 kbit/s |
| AMR-WB_6.60 | 6.60 kbit/s |
| AMR-WB_SID | 1.75 kbit/s |

The prior art discloses two existing AMR rate control operations, a multi-rate operation and a source controlled rate (SCR) operation. The AMR rate control operation is on the user plane.

In a multi-rate operation, the multi-rate encoding capability of AMR codec and AMR-WB codec is designed for preserving high speech quality for a wide range of transmission conditions. The multi-rate operation permits dynamic adjustment of the speech encoding rate during a communication session so that speech encoding rate continuously adapts to varying transmission conditions.

The speech encoding rate is dynamically adjusted by dividing the fixed overall bandwidth between speech data and error protective coding to enable the best possible trade-off between speech compression rate and error tolerance. Further, to perform multi-mode adaptation, a decoder at a speech receiver needs to signal a new preferred mode to an encoder at a speech transmitter. This signaling occurs with through in-band signal and is called a codec mode request (CMR).

In a SCR operation, the SCR operation permits an input signal to be encoded at a lower average rate by accounting for speech inactivity. The codec detects voice activity and reduces the number of transmitted bits and packets to a minimum during silent periods that indicate speech inactivity. The SCR operation is used to save power in user equipment and/or to reduce overall interference and loads in the network. SCR is a mandatory mechanism for AMR speech codec in 3GPP.

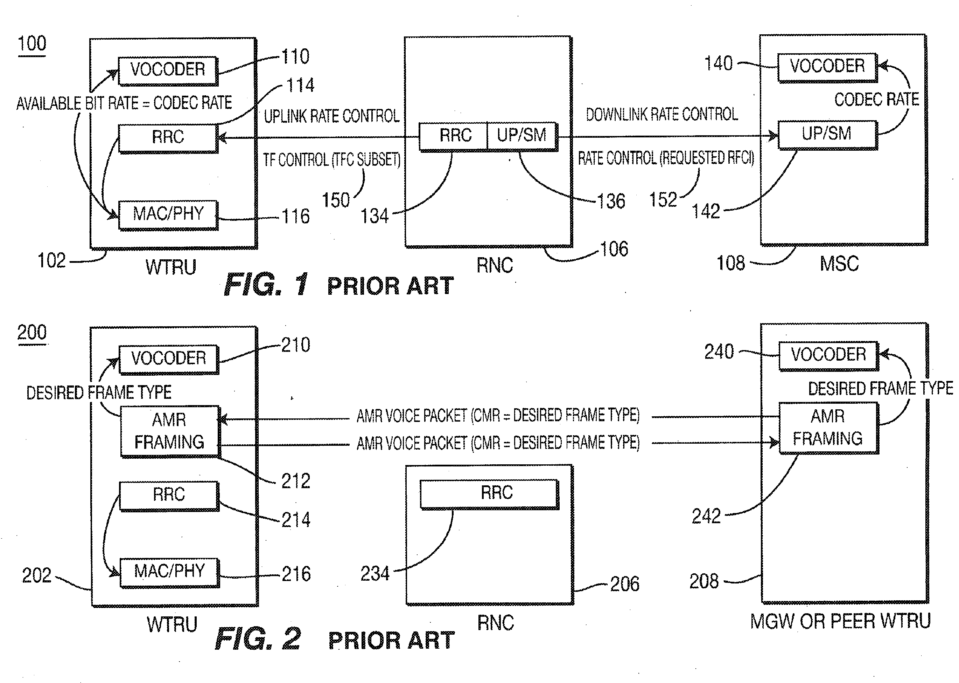

Figure 1 is an exemplary block diagram of a wireless communication system 100 supporting CS voice services configured to implement AMR rate control. The system 100 includes a wireless transmit/receive unit (WTRU) 102, a radio network controller (RNC) 106, and a mobile switching center (MSC) 108.

As shown in Figure 1, the WTRU 102 includes an AMR vocoder 110, a radio resource control (RRC) 114, and a medium access control/physical (MAC/PHY) layer 116. The RNC 106 includes a RRC 134 and a user plane/supported mode (UP/SM) 136. The MSC 108 includes a vocoder 140 and a UP/SM mode 142.

In a Universal Mobile Telecommunications System (UMTS) wireless communication system, a RNC 106 initiates an Access Stratum (AS) codec rate change based on observed channel conditions for CS voice services. The observed channels conditions are input from radio resource management (RRM) functions in the system. The RRM functions may include slowing down the input rate when there are bad radio conditions or increasing the input rate when there are good radio conditions. A RNC 106 is configured to trigger an uplink (UL) codec rate change by signaling a Transport Format Combination (TFC) control message to the WTRU 102 (step 150). Further, the RNC 106 is configured to trigger a downlink (DL) codec rate change by signaling a rate control message to a MSC (step 152). The rate control message may also be used to signal a rate change in the UL between the RNC and the MSC. The actual CS codec rate change occurs at the network access stratum (NAS) level. However, the NAS and AS are coupled using two AS messages, the TFC control message between the RNC and the WTRU and the rate control message between the RNC and the MSC, together thereby permitting the AS to indicate the need for rate changes and to notify the need for rate changes when there is a CS voice call.

Figure 2 is an exemplary block diagram of a wireless communication system 200 supporting PS VoIP services configured to implement AMR rate control. The system 200 includes a WTRU 202, a RNC 206, and a media gateway (MGW) or peer WTRU 208.

As shown in Figure 2, the WTRU 202 includes an AMR vocoder 210, an AMR framing unit 212, a RRC 214, and a MAC/PHY layer 216. The RNC 206 includes a RRC 234. The MGW or peer WTRU 208 includes an AMR vocoder 240 and an AMR framing unit 142.

In PS VoIP voice services, call and codec control occurs above the network NAS. This level is called the session initiation protocol (SIP)/AMR level. In VoIP architecture, the RRC 234 in the RNC 106 is located in the AS. The RRC 234 is isolated from the call and codec control functionality. As a result, the RRC 123 cannot trigger a codec rate change. Instead, to perform codec rate control there needs to be a mechanism that passes call information from the SIP/AMR level to the RRC 234.

Unlike AMR rate control, RRC requested rate control occurs in the AS. Accordingly, there exists a need for the RRC 234 to be able to coordinate the RRC commanded rate control for VoIP services with the AMR autonomous rate control at the application level. Two related prior art documents are WO-A-03019961 and US 2005099961.

Prior art has addressed the AMR rate control issue for PS VoIP services. The prior art has proposed three different methods for the RRC to control the AMR rate. In a first method, the RNC controls a WTRU's codec rate by allowing or forbidding certain transport format combinations (TFCs). In a second method, the RNC inspects all UL and DL VoIP packets and determines whether a current change mode request (CMR) value is appropriate. In a third method, a new RRC message signals a desired AMR codec rate to a WTRU.

Unfortunately, the third method as previously described fails to solve the issue of passing call information from the SIP/AMR level to the RRC because one message is insufficient. Therefore, a method and apparatus for messaging that enables the RRC to be aware of conditions at the SIP/AMR level is desired to allow a VoIP application to dynamically adjust its rate and voice quality according to network conditions.

Similar problems exist in any type of protocol where the bandwidth is controlled by the application itself. The AMR rate control issue is used by way of an example in this disclosure but the techniques disclosed herein also apply to other rate control issues.

SUMMARY

The present invention is related to rate control for VoIP services using messages to enable the RRC to be aware of activity in the SIP/ARM level and to recommend an ARM rate change according to conditions in a wireless communications network. The messages allow VoIP services to dynamically adjust rate and voice quality based on network conditions. The present invention is also related to a method for triggering RRC codec rate control using RRM conditions in the network. Further, the present invention is related to coordinating AMR autonomous rate control and RRC commanded rate control using a guard mechanism between messages.

BRIEF DESCRIPTION OF THE DRAWINGS

Figure 1 is an exemplary block diagram of a wireless communication system supporting CS voice services configured to implement AMR rate control;

Figure 2 is an exemplary block diagram of a wireless communication system supporting PS VoIP services configured to implement AMR rate control;

Figure 3 is an exemplary block diagram of a wireless communication system configured in accordance with the present invention; and

Figure 4 is an exemplary block diagram of 3GPP Long Term Evolution (LTE) wireless communication system configured in accordance with the present invention.

DETAILED DESCRIPTION OF THE PREFERRED EMBODIMENTS

Although the features and elements of the present invention are described in the preferred embodiments in particular combinations, each feature or element can be used alone (without the other features and elements of the preferred embodiments) or in various combinations with or without other features and elements of the present invention.

Hereafter, a wireless transmit/receive unit (WTRU) includes but is not limited to a user equipment (UE), mobile station, fixed or mobile subscriber unit, pager, or any other type of device capable of operating in a wireless environment. When referred to hereafter, a base station includes but is not limited to a Node-B, site controller, access point or any other type of interfacing device in a wireless environment.

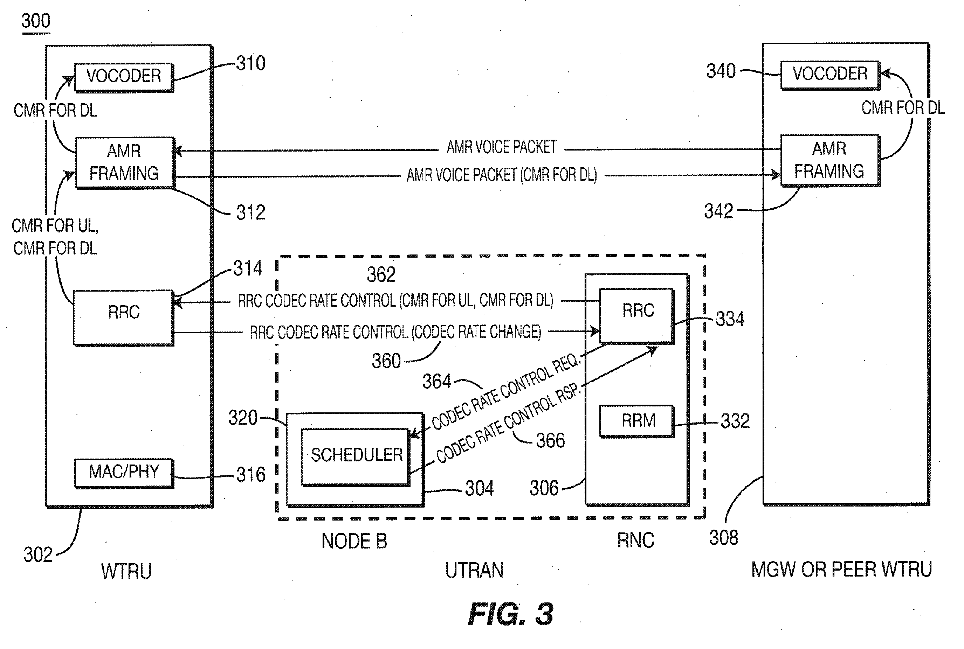

Figure 3 is an exemplary block diagram of a wireless communication system 300 configured in accordance with the present invention. The system includes a WTRU 302, a Node B 304, a RNC 306, a MGW or peer WTRU 308. The Node B 304 and the RNC 306 comprise a UMTS Terrestrial Radio Access Network (UTRAN) 350.

As shown in Figure 3, the WTRU 302 includes an AMR vocoder 310, an AMR framing unit 312, a RRC 314, and a MAC/PHY layer 316. The Node B 304 includes a scheduler 320. The RNC 306 includes a RRM 332 and a RRC 334. The MGW or peer WTRU 308 includes an AMR vocoder 340 and an AMR framing unit 342.

The RRC 314 in the WTRU 302 is configured to send a RRC Codec Report message 360 to the RRC 334 in the RNC 306. The RRC Codec Report message 360 informs the UTRAN 350 of the AMR codec information in the WTRU 302. The AMR codec information contains information regarding codec type. The WTRU 102 is aware of the content in the RRC Codec Report message 360 before sending the message to the RRC 334 in the UTRAN 350.

Further, the RRC Codec Report message 360 may be internally used within the WTRU 102 to convey AMR codec information between the RRC 314 and the AMR framing unit 312.

The content of the RRC Codec Report message 360 includes an application type, a codec type, a current AMR rate, and/or an ARM autonomous rate control scheme. The codec type is either ARM or AMR-WB. The current ARM rate may be the generic codec mode or a more general data date.

The RRC 314 in the WTRU 302 is configured to transmit the RRC Codec Report message 360 to the RRC 334 in the UTRAN 350 in a new RRC message. In an alternative embodiment, the RRC 314 in the WTRU 302 is configured to incorporate the information contained in the RRC Codec Report message 360 into an existing RRC message and then transmit the existing RRC message to the RRC 334 in the UTRAN 350.

For example, the UTRAN 350 may transmit a Measurement Control message to the WTRU 302 requesting that the RRC 314 in the WTRU 302 send measurement control information. The RRC 314 in the WTRU 302 may then add AMR codec information in a Measurement Report message and transmit the Measurement Report message to the RRC 334 in the UTRAN 350.

The RRC 314 in the WTRU 302 is configured to report the AMR codec information at configurable intervals. The earliest RRC Codec Report message 360 will be sent from the WTRU 302 to the UTRAN 350 is when the WTRU application layer requests a connection and/or resources for a VoIP application from a core network (CN) and UTRAN. The content of the RRC Codec Report message 360 need not be updated in each transmitted message.

The RRC 334 in the UTRAN 350 is configured to receive RRM information from the RRM 332. The RRM information may contain information on link quality and/or cell congestion. Further, the RRC 334 in the UTRAN 350 is configured to send a RRC Codec Rate Control message 362 to the RRC 314 in the WTRU 302 requesting an AMR rate change based on the received RRM information. The RRC 334 in the UTRAN 350 is configured to transmit the RRC Codec Rate Control message 362 when triggering the RRC rate control.

The content of the RRC Codec Rate Control message 362 includes a requested rate for the UL and/or DL, a time when the requested rate takes effect, and/or a period of time the requested rate remains in effect. The requested rate may be explicitly or implicitly signaled. The time when a requested rate takes effect and the period of time the requested rate remains in effect may be known according to a rule.

In an alternative embodiment, the RRC 334 in the UTRAN 350 does not directly request a rate change. Instead, the RRC 334 is configured to send RRM information to the RRC 314 in the WTRU 302. Then, the AMR vocoder 310 in the WTRU 302 is configured to use the received RRM information and determine the rate change.

The RRC 334 in the UTRAN 350 is configured to transmit the RRC Codec Rate Control message 362 to the RRC 314 in the WTRU 312 in a new RRC message. In an alternative embodiment, the RRC 334 in the UTRAN 350 is configured to incorporate the information contained in the RRC Codec Rate Control message 362 into an existing RRC message and then transmit the existing RRC message to the RRC 314 in the WTRU 302.

The RRC 334 is configured to trigger the RRC Codec Rate Control message 362 based on RRM triggering conditions using WTRU 302 and Node B 304 measurements. The triggering conditions may be configurable. The RRM triggering conditions may include a link quality condition, a cell load condition, an interference level condition, and/or other similar information permitting a link quality to be determined. The link quality condition may include a received signal strength indication and/or an error rate. Further, the RRC Codec Rate Control message 362 may be triggered based on the availability of radio resources. The trigger of the RRC Codec Rate Control message 362 may be based on multiple RRM input.

The RRC 334 in the UTRAN 350 is configured to transmit a Codec Rate Control Request message 364 to the scheduler 320 in the Node B 304 after the RRC 334 in the UTRAN 350 sends a request for AMR codec rate control to the RRC in the WTRU 302. The Codec Rate Control Request message 364 notifies the Node B 304 of the requested AMR rate change and permits the Node B 304 to change its resource allocation and scheduling accordingly. The Codec Rate Control Request message 364 is transmitted only when the RRC Codec Rate Control message 362 is transmitted.

The content of the Codec Rate Control Request message 364 includes a requested rate for the UL and/or DL, a time when the requested rate takes effect, and/or a period of time the requested rate remains in effect.

The RRC 334 in the UTRAN 350 is configured to transmit the Codec Rate Control Request message 364 to the scheduler 320 in the Node B 304 in a new individual Node B Application Part (NBAP) message or in a new individual Radio Network Subsystem Application Part (RNSAP) message as well in case of a drift RNC. In an alternative embodiment, the RRC 334 in the UTRAN 350 is configured to incorporate the information contained in the Codec Rate Control Request message 364 into an existing NBAP message and then transmit the existing NBAP message to the scheduler 320 in the Node B 304. For example, a radio link reconfiguration procedure may be used for this purpose.

The scheduler 320 in the Node B 304 is configured to transmit a Codec Rate Control Response message 366 to the RRC 334 in the UTRAN 350 in response to the received Codec Rate Control Request message 364 from the RNC 334. The Codec Rate Control Response message 366 is transmitted only when the Codec Rate Control Request message 364 is received.

The content of the Codec Rate Control Response message 366 includes a TFC or PDU size unable to be handled by the scheduler 320, a suggested data size or rate, and/or an indication that the requested rate has been applied.

The scheduler 320 in the Node B 304 is configured to transmit the Codec Rate Control Response message 366 to the RRC 334 in the UTRAN 350 in a new individual Node B Application Part (NBAP) message or in a new individual Radio Network Subsystem Application Part (RNSAP) message in case of a drift RNC. In an alternative embodiment, the scheduler 320 in the Node B 304 is configured to incorporate the information contained in the Codec Rate Control Response message 366 into an existing NBAP message and then transmit the existing NBAP message to the RRC 334 in the UTRAN 350. For example, a radio link reconfiguration procedure may be used for this purpose.

The messages introduced above allow for the coordination of AMR rate control and RRC commanded rate control. The messages connect the AMR rate control on the user plane with the RRC requested rate control on the control plane. The RRC 314 in the WTRU 302 is informed of the AMR autonomous rate control by a RRC AMR Report message thereby permitting the AS to learn about autonomous NAS rate changes. The RRC AMR Report message reports an AMR user plane rate change in the NAS layer and permits the AS layer to adapt to the rate change. The rate control requested by the RRC 314 is transmitted from the UTRAN 350 to the WTRU 302 in the RRC Codec Rate Control message 362 thereby permitting the NAS to learn about the need of a rate change based on the AS.

A RRC rate control operation is able to coexist with an autonomous AMR rate control operation because each operation is triggered by different conditions. The RRC rate control operation is triggered by radio qualities while the AMR rate control operation is triggered by a voice application or voice activities.

In a preferred embodiment, a guard mechanism is introduced to avoid situations in which there are contradictory AMR rate control and RRC rate control requests. When the AMR rate is recently changed by a RRC rate control operation or an AMR rate control operation and then a request for a contradictory operation arrives, no rate control operation occurs. The rate control operation only occurs after a guard period. For example, when a second request for a contradictory operation is received from the same source or a number of frames have been transmitted, whichever happens first. The number of frames may be a configurable parameter or may be set by a rule. When requests for contradictory operations arrive at the same time, no rate control operation occurs. Instead, the AMR rate remains unchanged until receiving a next request. For example, if the NAS autonomously modifies the rate control then the AS requests a rate change, the AMR rate is changed only after the AS again requests a rate change after a guard period. Likewise, if the AS modifies the rate control then a NAS autonomous rate change will not immediately occur.

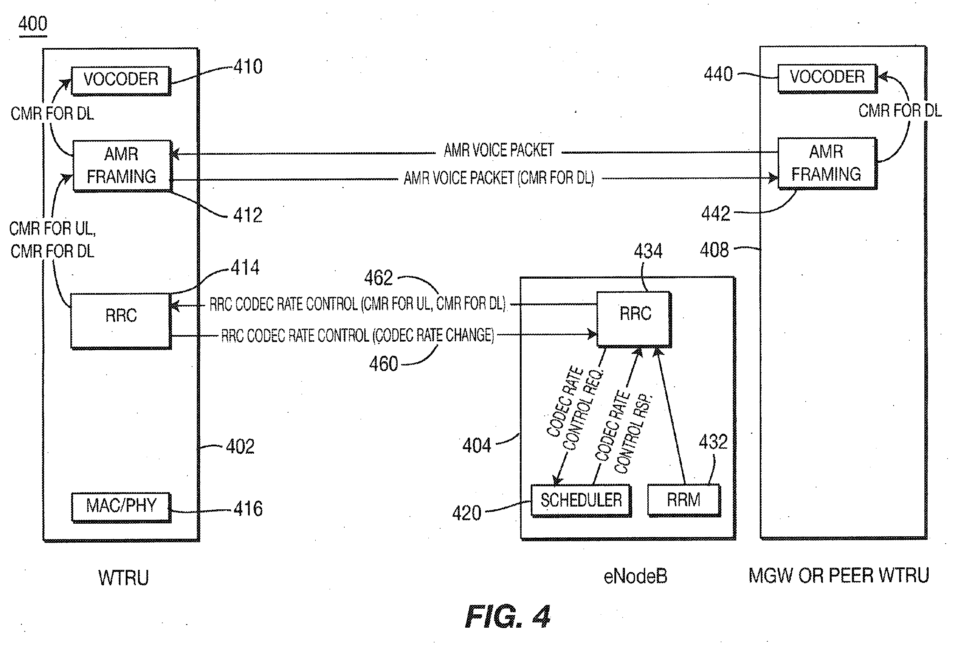

Figure 4 is an exemplary block diagram of 3GPP LTE wireless communication system 400 configured in accordance with the present invention. The system includes a WTRU 402, an evolved Node B (eNode B) 404, and a MGW or peer WTRU 408.

As shown in Figure 4, the WTRU 402 includes an AMR vocoder 410, an AMR framing unit 412, a RRC 414, and a MAC/PHY layer 416. The eNode B 404 includes a scheduler 420, a RRC 434, and a RRM 432. The MGW or peer WTRU 408 includes a vocoder 440 and an AMR framing unit 442. In the LTE architecture, the RRC functions are located in the eNode B 404. Therefore, the Codec Rate Control Request message 464 and the Codec Rate Control Response message 466 are internal messages within the eNode B 404.

The present invention applies to the AMR codec currently used for VoIP services in 3GPP. In addition, the present invention also may be used for AMR-WB codec and other types of multi-rate codecs. The present invention may work within current 3GPP architecture as well as LTE architecture. Further, the present invention applies to high-speed packet access (HSPA) Evolution (HSPA+).

The features of the present invention may be incorporated into an integrated circuit (IC) or configured in a circuit comprising a multitude of interconnecting components.

Although the features and elements of the present invention are described in the preferred embodiments in particular combinations, each feature or element can be used alone without the other features and elements of the preferred embodiments or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

Embodiments

1. A method for performing radio resource control (RRC) codec rate control for voice over IP (VoIP) services, the method comprising transmitting a message from a RRC in a wireless transmit/receive unit (WTRU).

2. The method of embodiment 1 further comprising receiving the message at a RRC in a radio network controller (RNC).

3. A method as in any of the embodiments 1-2 wherein the message informs the RRC in the RNC of adaptive multi-rate (AMR) codec information in the WTRU.

4. A method as in any of the embodiments 1-3 wherein the message is a RRC Codec Report message.

5. The method as in embodiment 4 wherein the RRC Codec Report message includes an application type.

6. A method as in any of the embodiments 4-5 wherein the RRC Codec Report message includes a codec type.

7. A method as in any of the embodiments 4-6 wherein the RRC Codec Report message includes a current AMR rate

8. A method as in any of the embodiments 4-7 wherein the RRC Codec Report message includes an AMR autonomous rate control scheme.

9. A method as in any of the embodiments 4-8 wherein the RRC in the WTRU is aware of its AMR codec information before transmitting the information to the RRC in the RNC.

10. A method as in any of the embodiments 4-9 wherein the message is used internally within the WTRU to convey the AMR codec information between AMR functions and RRC functions.

11. A method as in any of the embodiments 4-10 wherein the message is incorporated into an existing RRC message.

12. A method as in any of the embodiments 1-11 wherein the reporting interval of the AMR codec information is configurable.

13. The method of embodiment 12 wherein the earliest reporting of AMR codec information occurs when an application layer in the WTRU requests a connection and resources for a VoIP application from a core network (CN) and UMTS terrestrial radio access network (UTRAN).

14. A method as in any of the embodiments 1-13 wherein the RNC is located within a UTRAN.

15. A method for performing radio resource control (RRC) codec rate control for voice over IP (VoIP) services in a wireless communication network, the method comprising transmitting a message from a RRC in a radio network controller (RNC).

16. The method of embodiment 15 further comprising receiving the message at a RRC in a wireless transmit/receive unit (WTRU).

17. A method as in any of the embodiments 15-16 wherein the message requests an adaptive multi-rate (AMR) rate change based on radio resource management (RRM) conditions in the RNC.

18. A method as in any of the embodiments 15-17 wherein the message is a RRC Codec Rate Control message.

19. A method as in any of the embodiments 15-18 wherein the message includes a requested rate for uplink (UL) via explicit signaling of the data rate.

20. A method as in any of the embodiments 15-19 wherein the message includes a requested rate for downlink (DL) via explicit signaling of the data rate.

21. A method as in any of the embodiments 15-20 wherein the message includes a requested rate for uplink (UL) via implicit signaling of the data rate.

22. A method as in any of the embodiments 15-21 wherein the message includes a requested rate for downlink (DL) via implicit signaling of the data rate.

23. A method as in any of the embodiments 15-22 wherein the message includes information as to when the requested ARM rate change takes effect.

24. A method as in any of the embodiments 15-23 wherein the message includes information as to how long the requested ARM rate change remains in effect.

25. A method as in any of the embodiments 15-24 wherein the message includes RRM information.

26. A method as in any of the embodiments 15-25 wherein the WTRU receives the message and an AMR vocoder determines whether an AMR rate change is necessary.

27. A method as in any of the embodiments 15-26 wherein the message includes information as to when the requested AMR rate change takes effect.

28. A method as in any of the embodiments 15-27 wherein the message includes information as to how long the requested AMR rate change remains in effect are known by a predetermined rule.

29. A method as in any of the embodiments 15-28 wherein the message is an existing RRC message incorporating the requested an AMR rate change.

30. A method as in any of the embodiments 15-29 wherein the message is transmitted upon triggering a RRC codec rate control.

31. The method of embodiment 30 wherein RRC codec rate control is triggered by RRM conditions in the wireless communication network based on WTRU and Node B measurements and available network resources.

32. A method as in any of the embodiments 30-31 wherein RRC codec rate control for AMR is triggered by a link quality.

33. A method as in any of the embodiments 30-32 wherein RRC codec rate control for AMR is triggered by a cell load.

34. A method as in any of the embodiments 30-33 wherein RRC codec rate control for AMR is triggered by an interference level.

35. A method as in any of the embodiments 30-34 wherein RRC codec rate control for AMR is based on a plurality of RRM triggering thresholds.

36. The method of embodiment 35 wherein the plurality of RRM triggering thresholds are configurable.

37. A method as in any of the embodiments 15-36 wherein the RNC is located within a UMTS terrestrial radio access network (UTRAN).

38. A method as in any of the embodiments 15-37 further comprising transmitting a message from the RRC in the RNC to a scheduler in a Node B.

39. The method of embodiment 38 wherein the message notifies the Node B of the requested AMR rate change to enable the Node B to change its resource allocation and scheduling accordingly.

40. A method as in any of the embodiments 38-39 wherein the message is a Codec Rate Control Request message.

41. A method as in any of the embodiments 38-40 wherein the message includes a requested rate for uplink (UL) via explicit signaling of the data rate.

42. A method as in any of the embodiments 38-41 wherein the message includes a requested rate for downlink (DL) via explicit signaling of the data rate.

43. A method as in any of the embodiments. 38-42 wherein the message includes a requested rate for uplink (UL) via implicit signaling of the data rate.

44. A method as in any of the embodiments 38-43 wherein the message includes a requested rate for downlink (DL) via implicit signaling of the data rate.

45. A method as in any of the embodiments 38-44 wherein the message includes information as to when the requested ARM rate change takes effect.

46. A method as in any of the embodiments 38-45 wherein the message includes information as to how long the requested ARM rate change remains in effect.

47. A method as in any of the embodiments 38-46 wherein the message includes RRM information.

48. A method as in any of the embodiments 38-47 wherein the message includes information as to when the requested AMR rate change takes effect.

49. A method as in any of the embodiments 38-48 wherein the message includes information as to how long the requested AMR rate change remains in effect are known by a predetermined rule.

50. A method as in any of the embodiments 38-49 wherein the message is transmitted when the RRC Codec Rate Control message is transmitted.

51. A method as in any of the embodiments 38-50 wherein the message is an internal message within an evolved Node B in the long term evolution (LTE) architecture.

52. A method as in any of the embodiments 38-50 further comprising transmitting a message from the scheduler in the Node B to the RRC in the RNC.

53. The method of embodiment 52 wherein the message responds to the requested AMR rate change from the RNC.

54. A method as in any of the embodiments 52-53 wherein the message is a Codec Rate Control Response message.

55. A method as in any of the embodiments 52-54 wherein the message includes a transport format combination (TFC) that cannot be handled by the scheduler in the Node B.

56. A method as in any of the embodiments 52-55 wherein the message includes a protocol data unit (PDU) size that cannot be handled by the scheduler in the Node B.

57. A method as in any of the embodiments 52-56 wherein the message includes a suggested data size.

58. A method as in any of the embodiments 52-57 wherein the message includes a suggested data rate.

59. A method as in any of the embodiments 52-58 wherein the message includes an indication as to whether the requested data rate has been applied.

60. A method as in any of the embodiments 52-59 wherein the message is a new individual Node B application part (NBAP) message.

61. A method as in any of the embodiments 52-60 wherein the message is a new radio network subsystem application part (RNSAP) message as well for a drift RNC.

62. A method as in any of the embodiments 52-61 wherein the message is incorporated into an existing NBAP message.

63. A method as in any of the embodiments 52-62 wherein the message is transmitted when the Codec Rate Control Request message is received.

64. A method as in any of the embodiments 52-63 wherein the message is an internal message within an evolved Node B in the long term evolution (LTE) architecture.

65. A method for coordinating adaptive multi-rate (AMR) rate control and radio resource control (RRC) commanded rate control for voice over IP (VoIP) services in a wireless communication network, the method comprising receiving a message at a RRC in a radio network controller (RNC) wherein the message contains information on an AMR autonomous rate control.

66. The method of embodiment 65 further comprising transmitting a message from the RRC in the RNC wherein the message requests an AMR rate change based on radio resource management (RRM) conditions in the RNC.

67. A method as in any of the embodiments 65-66 wherein the message received at the RRC in the RNC is a RRC AMR Report message.

68. A method as in any of the embodiments 65-67 wherein the message transmitted from the RRC in the RNC is a RRC Codec Rate Control message.

69. A method as in any of the embodiments 65-68 wherein the AMR rate control is triggered by a voice application.

70. A method as in any of the embodiments 65-69 wherein the RRC commanded rate is triggered by network qualities.

71. A method as in any of the embodiments 65-70 wherein if an AMR rate is changed by one mechanism and a contradictory request arrives from a second mechanism then no rate control is conducted until the contradictory request arrives again or a number of frames have been transmitted.

72. The method of embodiment 71 wherein the mechanism is the AMR rate control or the RRC commanded rate control.

73. A method as in any of the embodiments 71-72 wherein the number of frames is a configurable parameter.

74. A method as in any of the embodiments 71-73 wherein the number of frames is set by a rule.

75. A method as in any of the embodiments 71-74 wherein if contradictory requests from different mechanisms arrive at the same time then no rate control is performed.

## Claims

1. A method for performing radio resource control RRC codec rate control for voice over IP VoIP services in a wireless transmit/receive mit WTRU, the method comprising:
transmitting a message from a radio resource controller in the WTRU, to a radio resource controller in a radio network controller RNC, wherein the message is a RRC Codec Report message including adaptive multi-rate AMR codec information in the WTRU; and
receiving a message at the radio resource controller in the WTRU from the radio resource controller in the RNC upon triggering RRC codec rate control in the radio resource controller of the RNC, wherein the message is a RRC Codec Rate Control message that is incorporated into an existing RRC message and requests an adaptive multi-rate AMR change of the RRC codec rate.

2. The method of claim 1 wherein the RRC Codec Rate Control message includes a requested RRC codec rate for at least one of uplink UL and downlink DL via explicit signaling of the data rate.

3. The method of claim 1 wherein the RRC Codec Rate Control message includes a requested RRC codec rate for at least one of uplink UL and downlink DL via implicit signaling of the data rate.

4. The method of claim 1 wherein the RRC Codec Rate Control message includes information as to when the AMR change of the RRC codec rate takes effect.

5. The method of claim 1 wherein RRC rate control in the radio resource controller of the RNC is triggered based on radio resource management RRM conditions.

6. A method for performing radio resource control RRC codec rate control for voice over IP VoIP services, in a radio network controller RNC, the method comprising:
receiving a message at radio resource controller in the RNC from a radio resource controller in a wireless transmit/receive unit WTRU, wherein the message is a RRC Codec Report message including adaptive multi-rate AMR codec information in the WTRU; and
transmitting a message from the radio resource controller in the RNC to the radio resource controller in the WTRU upon triggering RRC codec rate control in the RRC of the RNC, wherein the message is a RRC Codec Rate Control message that is incorporated into an existing RRC message and requests an adaptive multi-rate AMR change of the RRC codec rate.

7. The method of claim 6 wherein the RRC Codec Rate Control message includes a requested RRC codec rate for at least one of uplink UL and downlink DL via explicit signaling of the data rate.

8. The method of claim 6 wherein the RRC Codec Rate Control message includes a requested RRC codec rate for at least one of uplink UL and downlink DL via implicit signaling of the data rate.

9. The method of claim 6 wherein the RRC Codec Rate Control message includes information as to when the AMR change of the RRC codec rate takes effect.

10. The method of claim 6 wherein RRC rate control in the radio resource controller of the RNC is triggered based on radio resource management RRM conditions.

11. The method of claim 6 further comprising transmitting a message from the radio resource controller in the RNC, to a Node B, wherein the message is a Codec Rate Control Request message notifying the Node B of the requested AMR change of the RRC codec rate to enable the Node B to change its resource allocation and scheduling accordingly.

12. The method of claim 11 wherein the Codec Rate Control Request message includes information as to when the requested AMR change of the RRC codec rate takes effect.

13. The method of claim 11 wherein transmitting the Codec Rate Control Request message occurs when the RRC Codec Rate Control message is transmitted.

14. The method of claim 11 further comprising receiving a message from the Node B, wherein the message is a Codec Rate Control Response message responding to the requested AMR change of the RRC codec rate.

15. The method of claim 14 wherein the Codec Rate Control Response message includes at least one of a transport format combination TFC and a protocol data unit PDU size that cannot be handled by a scheduler in the Node B.

## Patentansprüche

1. Verfahren zum Durchführen der Funkressourcensteuerung RRC für die Codec-Ratensteuerung für Voice-over-IP-, VoIP-Dienste in einer drahtlosen Sende-/Empfangseinheit WTRU, wobei das Verfahren aufweist:
Senden einer Nachricht von einer Funkressourcensteuerung in der WTRU an eine Funkressourcensteuerung in einer Funknetzsteuerung RNC, wobei die Nachricht eine RRC-Codec-Meldungsnachricht ist, die eine adaptive Multiraten-AMR-Codec-Information in der WTRU umfaßt; und
Empfangen einer Nachricht an der Funkressourcensteuerung in der WTRU von der Funkressourcensteuerung in der RNC nach dem Auslösen der RRC-Codec-Ratensteuerung in der Funkressourcensteuerung der RNC, wobei die Nachricht eine RRC-Codec-Ratensteuerungsnachricht ist, die in eine vorhandene RRC-Nachricht eingebaut ist und eine adaptive Multiraten-, AMR-Änderung der RRC-Codec-Rate anfordert.

2. Verfahren nach Anspruch 1, wobei die RRC-Codec-Ratensteuerungsnachricht eine über explizite Signalisierung der Datenrate angeforderte RRC-Codec-Rate für die Aufwärtsstrecke UL und/oder die Abwärtsstrecke DL umfaßt.

3. Verfahren nach Anspruch 1, wobei die RRC-Codec-Ratensteuerungsnachricht eine über implizite Signalisierung der Datenrate angeforderte RRC-Codec-Rate für die Aufwärtsstrecke UL und/oder die Abwärtsstrecke DL umfaßt.

4. Verfahren nach Anspruch 1, wobei die RRC-Codec-Ratensteuerungsnachricht Informationen in Bezug darauf, wann die AMR-Änderung der RRC-Codec-Rate wirksam wird, umfaßt.

5. Verfahren nach Anspruch 1, wobei die RRC-Ratensteuerung in der Funkressourcensteuerung der RNC basierend auf Funkressourcenverwaltungs-, RRM-Bedingungen ausgelöst wird.

6. Verfahren zum Durchführen der Funkressourcensteuerung RRC für die Codec-Ratensteuerung für Voice-over-IP-, VoIP-Dienste in einer Funknetzsteuerung RNC, wobei das Verfahren aufweist:
Empfangen einer Nachricht an einer Funkressourcensteuerung in der RNC von einer Funkressourcensteuerung in einer drahtlosen Sende-/Empfangseinheit WTRU, wobei die Nachricht eine RRC-Codec-Meldungsnachricht ist, die eine adaptive Multiraten-AMR-Codec-Information in der WTRU umfaßt; und
Senden einer Nachricht von der Funkressourcensteuerung in der RNC an die Funkressourcensteuerung in der WTRU nach dem Auslösen der RRC-Codec-Ratensteuerung in der RRC der RNC, wobei die Nachricht eine RRC-Codec-Ratensteuerungsnachricht ist, die in eine vorhandene RRC-Nachricht eingebaut ist und eine adaptive Multiraten-, AMR-Änderung der RRC-Codec-Rate anfordert.

7. Verfahren nach Anspruch 6, wobei die RRC-Codec-Ratensteuerungsnachricht eine über explizite Signalisierung der Datenrate angeforderte RRC-Codec-Rate für die Aufwärtsstrecke UL und/oder die Abwärtsstrecke DL umfaßt.

8. Verfahren nach Anspruch 6, wobei die RRC-Codec-Ratensteuerungsnachricht eine über implizite Signalisierung der Datenrate angeforderte RRC-Codec-Rate für die Aufwärtsstrecke UL und/oder die Abwärtsstrecke DL umfaßt.

9. Verfahren nach Anspruch 6, wobei die RRC-Codec-Ratensteuerungsnachricht Informationen in Bezug darauf, wann die AMR-Änderung der RRC-Codec-Rate wirksam wird, umfaßt.

10. Verfahren nach Anspruch 6, wobei die RRC-Ratensteuerung in der Funkressourcensteuerung der RNC basierend auf Funkressourcenverwaltungs-, RRM-Bedingungen ausgelöst wird.

11. Verfahren nach Anspruch 6, welches ferner das Senden einer Nachricht von der Funkressourcensteuerung in der RNC an einen Node B aufweist, wobei die Nachricht eine Codec-Ratensteuerungsanforderungsnachricht ist, die den Node B über die angeforderte AMR-Änderung der RRC-Codec-Rate benachrichtigt, um den Node B zu befähigen, seine Ressourcenzuweisung und Zeitplanung entsprechend zu ändern.

12. Verfahren nach Anspruch 11, wobei die Codec-Ratensteuerungsanforderungsnachricht Informationen in Bezug darauf umfaßt, wann die angeforderte AMR-Änderung der RRC-Codec-Rate wirksam wird.

13. Verfahren nach Anspruch 11, wobei das Senden der Codec-Ratensteuerungsanforderungsnachricht stattfindet, wenn die RRC-Codec-Ratensteuerungsnachricht gesendet wird.

14. Verfahren nach Anspruch 11, das ferner das Empfangen einer Nachricht von dem Node B aufweist, wobei die Nachricht eine Codec-Ratensteuerungsantwortnachricht ist, die auf die angeforderte AMR-Änderung der RRC-Codec-Rate antwortet.

15. Verfahren nach Anspruch 14, wobei die Codec-Ratensteuerungsantwortnachricht eine Transportformatkombinations-, TFC- und/oder eine Protokolldateneinheits-, PDU-Größe aufweist, die von einem Zeitsteuerprogramm in dem Node B nicht gehandhabt werden kann.

## Revendications

1. Procédé pour réaliser un contrôle de vitesse de codec de contrôle de ressource radio, RRC, pour des services de voix sur IP, VoIP, dans une unité de transmission/réception sans fil, WTRU, le procédé comprenant les étapes consistant à :
transmettre un message d'un contrôleur de ressource radio dans la WTRU à un contrôleur de ressource radio dans un contrôleur de réseau radio, RNC, dans lequel le message est un message de rapport de codec de RRC comprenant des informations de codec à vitesses multiples adaptatives, AMR, dans la WTRU ; et
recevoir un message au contrôleur de ressource radio dans la WTRU à partir du contrôleur de ressource radio dans le RNC lors du déclenchement de contrôle de vitesse de codec de RRC dans le contrôleur de ressource radio du RNC, dans lequel le message est un message de contrôle de vitesse de codec de RRC qui est incorporé dans un message de RRC existant et demande un changement de vitesses multiples adaptatives, AMR, de la vitesse de codec de RRC.

2. Procédé selon la revendication 1, dans lequel le message de contrôle de vitesse de codec de RRC comprend une vitesse de codec de RRC demandée pour au moins une parmi une liaison montante, UL, et une liaison descendante, DL, par l'intermédiaire de signalisation explicite du débit de transfert.

3. Procédé selon la revendication 1, dans lequel le message de contrôle de vitesse de codec de RRC comprend une vitesse de codec de RRC demandée pour au moins une parmi une liaison montante, UL, et une liaison descendante, DL, par l'intermédiaire de signalisation implicite du débit de transfert.

4. Procédé selon la revendication 1, dans lequel le message de contrôle de vitesse de codec de RRC comprend des informations indiquant l'instant auquel le changement d'AMR de la vitesse de codec de RRC se produit.

5. Procédé selon la revendication 1, dans lequel le contrôle de vitesse de RRC dans le contrôleur de ressource radio du RNC est déclenché sur la base de conditions de gestion de ressource radio, RRM.

6. Procédé pour réaliser un contrôle de vitesse de codec de contrôle de ressource radio, RRC, pour des services de voix sur IP, VoIP, dans un contrôleur de réseau radio, RNC, le procédé comprenant les étapes consistant à :
recevoir un message au contrôleur de ressource radio dans le RNC à partir d'un contrôleur de ressource radio dans une unité de transmission/réception sans fil, WTRU, dans lequel le message est un message de rapport de codec de RRC comprenant des informations de codec à vitesses multiples adaptatives, AMR, dans la WTRU ; et
transmettre un message du contrôleur de ressource radio dans le RNC au contrôleur de ressource radio dans la WTRU lors du déclenchement de contrôle de vitesse de codec de RRC dans le RRC du RNC, dans lequel le message est un message de contrôle de vitesse de codec de RRC qui est incorporé dans un message de RRC existant et demande un changement de vitesses multiples adaptatives, AMR, de la vitesse de codec de RRC.

7. Procédé selon la revendication 6, dans lequel le message de contrôle de vitesse de codec de RRC comprend une vitesse de codec de RRC demandée pour au moins une parmi une liaison montante, UL, et une liaison descendante, DL, par l'intermédiaire de signalisation explicite du débit de transfert.

8. Procédé selon la revendication 6, dans lequel le message de contrôle de vitesse de codec de RRC comprend une vitesse de codec de RRC demandée pour au moins une parmi une liaison montante, UL, et une liaison descendante, DL, par l'intermédiaire de signalisation implicite du débit de transfert.

9. Procédé selon la revendication 6, dans lequel le message de contrôle de vitesse de codec de RRC comprend des informations indiquant l'instant auquel le changement d'AMR de la vitesse de codec de RRC se produit.

10. Procédé selon la revendication 6, dans lequel contrôle de vitesse de RRC dans le contrôleur de ressource radio du RNC est déclenché sur la base de conditions de gestion de ressource radio, RRM.

11. Procédé selon la revendication 6, comprenant en outre l'étape consistant à transmettre un message du contrôleur de ressource radio dans le RNC à un noeud B, dans lequel le message est un message de demande de contrôle de vitesse de codec notifiant le noeud B du changement d'AMR demandé de la vitesse de codec de RRC pour permettre au noeud B de changer son attribution et ordonnancement de ressource en conséquence.

12. Procédé selon la revendication 11, dans lequel le message de demande de contrôle de vitesse de codec comprend des informations indiquant l'instant auquel le changement d'AMR demandé de la vitesse de codec de RRC se produit.

13. Procédé selon la revendication 11, dans lequel l'étape consistant à transmettre le message de demande de contrôle de vitesse de codec se produit lorsque le message de contrôle de vitesse de codec de RRC est transmis.

14. Procédé selon la revendication 11, comprenant en outre l'étape consistant à recevoir un message à partir du noeud B, dans lequel le message est un message de réponse de contrôle de vitesse de codec en réponse au changement d'AMR demandé de la vitesse de codec de RRC.

15. Procédé selon la revendication 14, dans lequel le message de réponse de contrôle de vitesse de codec comprend au moins une parmi une association de formats de transport, TFC, et une taille d'unité de données de protocole, PDU, qui ne peut pas être traitée par un ordonnanceur dans le noeud B.
